# EUROPEAN PATENT APPLICATION

(11) **EP 2 404 783 A1**
(43) Date of publication of application: **11.01.2012**
(21) Application number: 10169083.2
(22) Date of filing: 09.07.2010
(51) Int. Cl.: B60R 7/04, B60R 7/08

(54) **Roof module with storage assembly**

(71) Applicant: Delphi Technologies, Inc., Troy, MI 48007 (US)
(72) Inventor: Leng, Peter, 55128, Mainz (DE); Lipka, Janusz, 02-066, Warsaw (PL)
(74) Representative: Robert, Vincent

(57) **Abstract**

An overhead console for a vehicle interior, comprising a storage module provided with a housing having an aperture, a cover pivotally mounted on the housing, a receptacle is pivotally mounted to the cover between a folded position and an unfolded position. The storage module can be set in a storage configuration, cover closed and receptacle folded inside the housing, or in a deployed configuration, cover open and receptacle unfolded allowing the user to easily grab an object stored in the receptacle. The storage configuration requires minimal height in the overhead module and the deployed configuration provides maximum accessibility.

## Description

### TECHNICAL FIELD

The present invention relates to a vehicle overhead console comprising a receptacle in which can be stored an object such as eye-glasses.

### BACKGROUND OF THE INVENTION

Overhead console of the aforementioned type exist in vehicles so a user, such as the driver, can easily take or put away a pair of eye-glasses. The difficulty in designing an overhead console resides in the necessary optimum compromise to be achieved. The console must be robust, easy to open and to close with one hand, the content must be easy to reach, the object has to be safely stored and, the overall package should be minimal.

In US 6,276,737 B1 Cansfield et al. disclose an overhead console comprising a storage member that deploys when opening. The storage member has one aperture upwardly oriented when the console is closed. Its deployment is the result of a downward translation followed by rotation so the aperture is presented toward the driver.

This console is complex in design requiring multiple components to manage independently the translation and the rotation. Furthermore, when in closed position, the storage member is upwardly oriented in the console thus requiring an important height in the console.

In US 2007/0133217 Al Tiesler et al. disclose an overhead module comprising a housing closed by a pivoting door, and a storage compartment fixed to the internal side of the door so, when opening the door the user can take the object that is in the storage compartment. When closed the door is horizontal and, when open the door is vertical, the storage compartment having one open side oriented upward.

Relative to US 6,276,737 B1, Tiesler's storage compartment requires less packaging space in closed position. The issue is to grab the stored object in the interior of the storage compartment in open position. The vehicle driver has to enter the hand/fingers through the upwardly oriented open side while still seating.

It is important to propose to the market an overhead console solving afore mentioned problems in term of design simplification, minimal volume in closed position, and maximal accessibility when in open position.

### SUMMARY OF THE INVENTION

Accordingly, it is an object of the present invention to provide an overhead console which maintains a high degree of functionality within a compact design, and consisting of exceptionally few individual parts convenient to assemble.

In carrying out the above object and other objects, features, and advantages, the present invention provides a switch assembly according to the preamble of claim 1.

Specifically, the present invention is related to an overhead console for a vehicle interior, comprising a storage module provided with a housing having an aperture, a cover pivotally mounted on the housing about a first axis between a closed position and an open position with regard to the aperture, a receptacle mounted on the cover so that in closed position the receptacle is inside the housing inaccessible to a user and, in open position the receptacle is outside the housing accessible to a user. The receptacle is pivotally mounted to the cover about a second axis, parallel to the first axis, between a folded position wherein the receptacle is in abutment against the cover and an unfolded position wherein the receptacle is rotated away from the cover. The storage module can be set in a storage configuration, the cover being in closed position and the receptacle being in folded position inside the housing, retaining an object stored in the receptacle. It can be set as well in a deployed configuration, the cover being in open position and the receptacle being in unfolded position open upwardly and toward the user to allow the user to grab more easily said object. Thanks to this, the storage configuration requires minimal height in the overhead module and the deployed configuration provides maximum accessibility.

Furthermore, the overhead console may comprise driving means so the rotation of the cover about the housing drives the rotation of the receptacle about the cover. Thus, the deployed configuration can advantageously be obtained by just actuating the cover toward the open position.

In a first embodiment, the driving means comprise a lever extending from a third axis fixed to the housing to a fourth axis fixed to the receptacle. The lever is pivotally mounted about the third and about the fourth axes, which are parallel to the first and second axes. The distance between the third and the fourth axes is longer than the distance between the first and the second axes such that, in closed position, the line joining the first axis to the second axis is intersecting with the line joining the third axis to the fourth axis and, in open position, said two lines are not intersecting.

The receptacle advantageously comprises a support wall that, in deployed configuration, is substantially horizontal, the stored object being on it.

### BRIEF DESCRIPTION OF THE DRAWINGS

The present invention is now described by way of example with reference to the accompanying drawings in which:
Figure 1 is a general view of the overhead console and a storage module, as per the present invention. The storage module is in a deployed configuration and a pair of eye-glasses is placed in a receptacle.
Figure 2 is a side view of the console of Figure 1 in a storage configuration. A sketch of the kinematic is superposed to the view.
Figure 3 is a side view of the console of Figure 1 in intermediate position. A sketch of the kinematic is superposed to the view.
Figure 4 is a side view of the console of Figure 1 in the deployed configuration of Figure 1. A sketch of the kinematic is superposed to the view.
Figure 5 is an exploded view of the console according to an embodiment provided with driving means.

### DESCRIPTION OF THE PREFERRED EMBODIMENTS

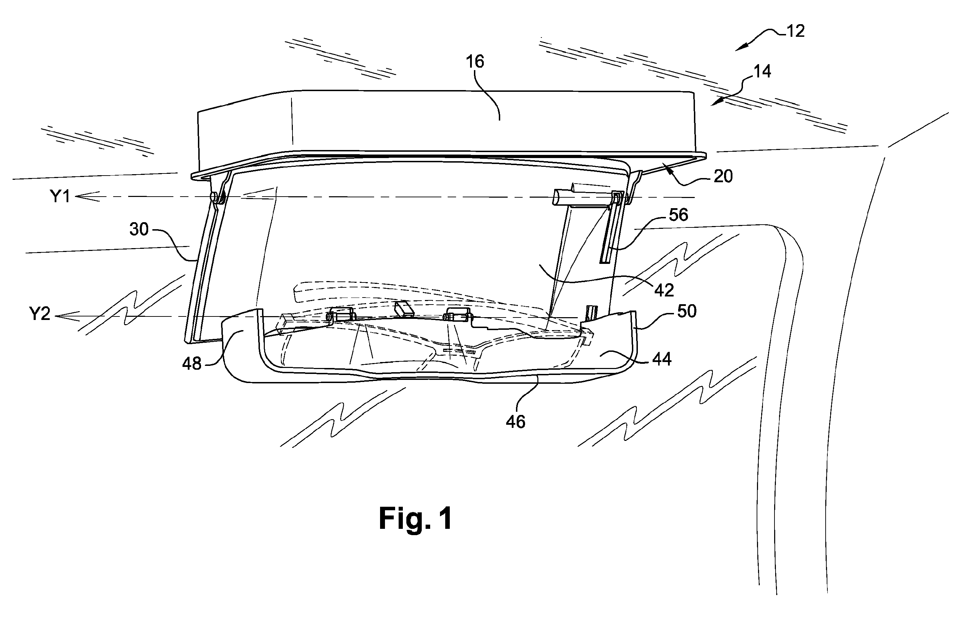

In the following description, similar elements could be designated with the same reference numbers. Also, as presented in Figure 1, to facilitate the understanding of the description, the various elements of the present invention are placed relative to a vehicle in a standard direct orthogonal axes system (X, Y, Z) where,
X is the longitudinal horizontal axis of the vehicle frontwardly oriented,
Y is the transversal horizontal axis oriented from the right to the left,
Z is the vertical axis upwardly oriented,
and where RY is a rotation about the transversal axis Y.

In a motor vehicle 10, Figure 1 sketches an overhead console 12 comprising a storage module 14 where an occupant of the vehicle has placed a pair of eye-glasses. Other objects, such as a wallet, can be placed in the storage module 14. Generally, the storage module 14 is fixed to the roof of the vehicle between the front occupants, in the vicinity of the windshield. To access the storage module 14 the occupants have to raise their hands above their heads.

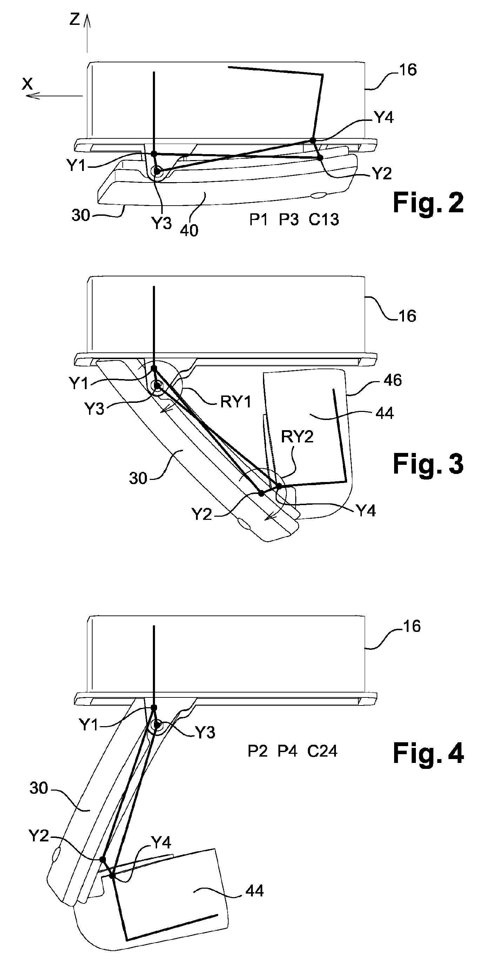

The storage module 14 of the present invention comprises a housing 16 defining an inside volume 18 that is accessible through a horizontal aperture 20 downwardly oriented. The inside volume 18 is above the aperture 20. The aperture 20 can be closed thanks to a cover 30 pivotally mounted relative to the housing 16 about a first transversal axis Y1. Thus, the cover 30 is able to pivot as per a first rotation RY1, between a closed position P1 (Figure 2) where it is horizontal sealing the aperture 20, and an open position P2 where it is substantially vertical (Figures 1 and Figure 4).

In the closed position P1, the cover 30 as its outer face 40 downwardly oriented visible to the occupants of the vehicle 10, and its inner face 42, opposite the outer face 40, upwardly oriented inside 18 the housing 16.

In the open position P2, the outer face 40 is frontwardly oriented, hardly visible to the vehicle occupants, and the inner face 42 is backwardly oriented, easily visible to the vehicle occupants.

As presented on the figures, the aperture 20 and the cover 30 often have rectangular shapes, the angles of which may be sharp or rounded. Furthermore, the aperture 20 and the cover 30 in closed position P1 are described horizontal while the cover 30 in open position P2 is presented vertical after a rotation at right angle 90°. Similarly, one can easily understand that these orientations are chosen to ease and not to limit the description. Other orientations and angular amplitudes are possible.

The storage module 14 further comprises a receptacle 44 delimiting a volume within which can be stored a pair of eye-glasses. The receptacle 44 has a support wall 46 from the edges of which extend perpendicularly a pair of lateral walls 48, 50, and a bottom wall 52. The bottom wall 52 has a transversal free edge 54 about which the receptacle 44 is pivotally mounted on the inner face 42 of the cover 30, about a second transversal axis Y2.

The receptacle 44 is able to rotate about the second axis Y2, according to a second rotation RY2 between a folded position P3 wherein the support wall 46 is parallel to the cover 30 (Figure 2), and an unfolded position P4 wherein the support wall 46 is substantially normal to the cover 30 (Figure 4).

The overall dimensions of the receptacle 44 are smaller than the aperture 20 so, the receptacle 44 can pass through the aperture 20 when pivoting the cover 30 back and forth between the closed position P1 and the open position P2.

In the closed position P1, the receptacle 44 is in the folded position P3 enclosed inside the housing 16 (Figure 2), the pair of eye-glasses being safely secured between the cover 30 and the walls of the receptacle 44.

The shape of the receptacle 44 may depart from the above description. For example, the joining areas between the support wall 46 and the lateral and bottom walls may be sharp or rounded as in the Figures. Also, the support wall 46 may be shaped so the object for which it is dedicated is best maintained. A receptacle 44 designed for a wallet may have a flat support wall 46 while for eye-glasses a small central bump for placing the area of the nose may be provided (Figure 1).

Also, the second rotation RY2 is described to enable the receptacle 44 to pivot at right angle 90° between the folded position P3 and the unfolded position P4. Other angular amplitudes are of course possible smaller or larger than the right angle. For instance, Figure 4 represents the unfolded receptacle 44 with angular amplitude smaller than 90°.

The overall actuation of the storage module 14 is now described.

In combining the first rotation RY1 and the second rotation RY2 the storage module 14 takes various configurations between a storage configuration C13 (Figure 2) wherein the cover 30 is in closed position P1 and the receptacle 44 is in folded position P3, and a deployed configuration C24 (Figure 4) wherein the cover 30 is in open position P2 and the receptacle 44 is in unfolded position P4.

An obvious advantage of the present invention resides in the storage C 13 and in the deployed C24 configurations. Indeed, in storage configuration C13, the stored object is well secured inside the housing 16. The storage configuration C13 takes a minimal height in the roof module thus not protruding prominently in the vehicle interior. When in deployed configuration C24 the receptacle 44 comes downwardly toward the occupants, thus offering an easy access to the object, the occupants not having to raise hands up to the roof as the receptacle 44 is brought down to them by the cover 30.

The storage module 14 is further provided with a locking-unlocking device (not represented) that maintains the cover 30 closed when in storage configuration C13 and that allows the deployment of the receptacle 44 when activated. The locking device may be of any known type such as a push-pull actuation button integrated in the cover 30.

To commute back and forth between the deployed configuration C24 and storage configuration C13, the module 14 may be provided with an actuation mean that generates the rotational movements RY1 and RY2 in the required direction. Such an actuation mean (not represented) may for instance comprise an electrical motor or, for manual actuation, springs actuated in torsion or compression or magnetic devices exercising forces between the housing 16 and the cover 30 and between the cover 30 and the receptacle 44.

Furthermore, the first and second rotations RY1, RY2, may advantageously be set dependant upon each other thanks to driving means. With such driving mean, when pivoting the cover 3 0 through the first rotation RY1, the driving means engage the second rotation RY2 pivoting the receptacle 44.

Now, is described an embodiment for driving means, understanding that other embodiments are possible.

The driving means comprise a lever 56 that extends from a first extremity 58 pivotally mounted relative to the housing about a third transversal axis Y3, to a second extremity 60 pivotally mounted relative to the receptacle 44, about a fourth transversal axis Y4. Thus, the receptacle 44 is linked to the housing 16 via the cover 30 between the first and the second axes Y1, Y2, and also via the lever 56, between the third and the fourth axes Y3, Y4. The first and third axes Y1, Y3, both on the housing 16, are close together, and the second and fourth axis Y2, Y4, both on the receptacle 44, are also close together. The inter-axial distance from first to second axis Y1, Y2, is slightly shorter than the inter-axial distance from third to fourth axis Y3, Y4. As sketched on Figure 2, in storage configuration C13, the third axis Y3 is below the first axis Y1, while the fourth axis Y4 is above the second axis Y2, the straight line joining the first to the second axes Y1, Y2, intersecting the straight line joining the third to the fourth axes Y3, Y4.

The kinematic of this arrangement, as sketched in the sequence of Figures 2, 3 and 4, relies in the trapezoid set by the four transversal axis Y1, Y2, Y3, Y4, being angularly deformable while the lengths remain constant. These combinations of rotations result in the deployment, or the folding, of the receptacle 44.

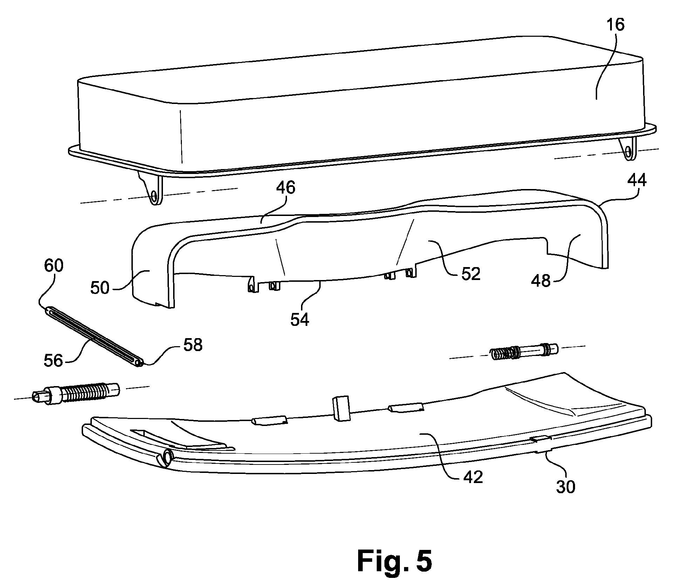

In Figure 5, the embodiment is presented with a single lever 56. Alternatively to the straight lever 56, other shapes are possible. Also, for symmetry and rigidity purposes, additional levers may be added symmetrically to the lever 56 about the storage 14.

Alternatively the cooperation means may comprise a gear wheel pivotally mounted on the cover and engaging with a first worm gear coaxial to the first axis Y1 and fixed to the housing and with, a second worm gear fixed to the receptacle and coaxial to the second axis Y2.

A first rotation RY1 of the cover 30 obliges the gear wheel to rotate, engaging the second worm gear in a rotation RY2 thus, obliging the receptacle 44 to rotate about the cover 30.

## Claims

1. Overhead console (12) for a vehicle interior, comprising a storage module (14) provided with
a housing (16) having an aperture (20),
a cover (30) pivotally mounted on the housing (16) about a first axis (Y1) between a closed position (P1) and an open position (P2) with regard to the aperture (20),
a receptacle (44) mounted on the cover (30) so that in closed position (P1) the receptacle (44) is inside the housing (16) inaccessible to a user and, in open position (P2) the receptacle (44) is outside the housing (16) accessible to a user,
**characterized in that**
the receptacle (44) is pivotally mounted to the cover (30) about a second axis (Y2), parallel to the first axis (Y1), between a folded position (P3) wherein the receptacle (44) is in abutment against the cover (30) and an unfolded position (P4) wherein the receptacle (44) is rotated away from the cover (30) so that,
the storage module (14) can be set in a storage configuration (C 13), the cover (30) being in closed position (P1) and the receptacle (44) being in folded position (P3) inside the housing (16) to retain an object stored in the receptacle (44) and, can be set as well in a deployed configuration (C24), the cover (30) being in open position (P2) and the receptacle (44) being in unfolded position (P4) open upwardly and toward the user to allow the user grabbing more easily said object.

2. Overhead console (12) as set in claim 1 further comprising driving means (56) so the rotation of the cover (30) about the housing (16) drives the rotation of the receptacle (44) about the cover (30), and so that, the deployed configuration (C24) can be obtained by just actuating the cover (30) toward the open position (P2).

3. Overhead console (12) as set in claim 2 wherein the driving means (56) comprise a lever (56) extending between a third axis (Y3) fixed to the housing (16) and a fourth axis (Y4) fixed to the receptacle (44), the lever (56) being pivotally mounted about the third and about the fourth axes (Y3, Y4), the third and the fourth axes (Y3, Y4) being parallel to the first and second axes (Y1, Y2).

4. Overhead console (12) as set in claim 3 wherein the distance between the third and the fourth axes (Y3, Y4) is longer than the distance between the first and the second axes (Y1, Y2) such that,
in closed position (P1), the line joining the first axis (Y1) to the second axis (Y2) is intersecting with the line joining the third axis (Y3) to the fourth axis (Y4) and,
in open position (P2), said two lines are not intersecting.

5. Overhead console (12) as set in any of the preceding claim wherein the receptacle (44) comprises a support wall (46) that, in deployed configuration (C24), is substantially horizontal, the stored object being on said support wall (46).
